# EUROPEAN PATENT APPLICATION

(11) **EP 4 797 139 A1**
(43) Date of publication of application: **26.08.2026**
(21) Application number: 26160124.9
(22) Date of filing: 23.02.2026
(51) Int. Cl.: G06F 21/62, G06N 20/00, H04L 9/00

(54) **MACHINE LEARNING WITH PII PROTECTION AND EXPLAINBILITY**

(30) Priority: 25.02.2025 GB 202502667
(71) Applicant: Vodafone Group Services Limited, Newbury, Berkshire RG14 2FN (GB)
(72) Inventor: THOMAS, Antony, London, W2 6BY (GB); HOU, Jindong, London, W2 6BY (GB); SHATA, Mohamed, London, W2 6BY (GB); WHITTINGHAM, Lee, London, W2 6BY (GB)
(74) Representative: Boult Wade Tennant LLP

(57) **Abstract**

A computer-implemented method of processing input data, comprising receiving an encrypted model parameter update, wherein at least model parameters relating to personally identifiable information are encrypted using a homomorphic encryption algorithm, decrypting the encrypted model parameter update using the homomorphic encryption algorithm, applying the decrypted model parameter update to model parameters of a machine learning model, receiving, by the machine learning model, input data comprising personally identifiable information; processing, using a machine learning model, the input data to produce output data; and applying an explainability algorithm to the output data.

## Description

### TECHNICAL BACKGROUND

The field of the invention addresses the processing of personally identifiable information (PII) and training a machine learning model with PII in a collaborative manner, such as federated learning, with a focus on leveraging homomorphic encryption for secure computations. This approach capitalizes on the unique capabilities of homomorphic encryption to enable secure computations on PII while maintaining the privacy of the data. Federated learning algorithms facilitate the decentralized training of Machine learning models, allowing data to remain on local devices while contributing to a collective model improvement.

### BACKGROUND

The current state of federated learning algorithms is hindered by the inability to process and interpret the results derived from the processing of PII. The complexity of these algorithms, combined with the sensitivity of the data involved, often results in outputs that are not easily understood by stakeholders. This lack of interpretability can impede the adoption and trust in federated learning systems, which are essential in contexts where understanding the decision-making process is critical.

Moreover, the existing paradigm of federated learning does not adequately address the security aspects associated with PII. The risk of unauthorized breaches and data exposure remains a significant concern, as conventional encryption methods are not designed to accommodate the intricacies of federated learning environments. The need for a secure and privacy-preserving framework that can handle PII without compromising its confidentiality is crucial, and such solutions are currently lacking in the field.

The challenge of processing PII in a federated learning context is further intensified by the delicate balance between data utility and privacy. Current methodologies often fail to achieve an optimal equilibrium, resulting in subpar outcomes that do not fully leverage the potential of the data. This not only affects the overall performance of federated learning systems but also raises concerns regarding the protection of user privacy. Additionally a lack of explainability feature results in the outcomes, mean that outcomes are often not well understood and not easily for adopted.

### SUMMARY OF THE INVENTION

An aspect of the disclosure relates to a computer-implemented method of processing input data, which comprises receiving an encrypted model parameter update, wherein at least model parameters relating to personally identifiable information are encrypted using a homomorphic encryption algorithm, decrypting the encrypted model parameter update using the homomorphic encryption algorithm, applying the decrypted model parameter update to model parameters of a machine learning model, receiving, by the machine learning model, input data comprising personally identifiable information; processing, using a machine learning model, the input data to produce output data; and applying an explainability algorithm to the output data.

"Input data" refers to data that is input into a machine learning model for processing. "Output data" refers to an output of a model in general. The format and content of the output data depends on the kind of model that is used for outputting the output data.

"Machine learning model" refers to a processing or mapping of input data into output data, wherein opposed to classical algorithmic processing, during a learning phase, the machine learning model learns the processing using training data, after the learning phase the learned processing is applied to new input data. The processing may be any kind of processing such as solving a classification problem or a regression problem, but also more complex task such as natural language processing, image to image processing and the like. "Local machine learning model" refers to the machine learning model that is run on the user devices."Model parameter data" refers to numerical values that define the behavior of a machine learning model. These parameters are learned from data and are adjusted during the training process to improve the model's performance. "Model parameter update" refers to the process of adjusting the values of the parameters of a machine learning model based on the data and the learning algorithm. In the context of federated learning, a model parameter update involves each participating device computing an update to its local model based on its local data and then sharing this update with a central server or aggregator, here in the server device, which then combines or aggregates these updates to improve the global model. The process is typically done using secure multiparty computation techniques, such as homomorphic encryption, to ensure the privacy of the data during the update process.

"Personally identifiable information" (PII) refers to any information connected to a specific individual that can be used to uncover that individual's identity, such as their social security number, full name, email address or phone number, but also any kind of information that can be directly linked to that individual.

The use of a homomorphic encryption algorithm secures model parameters containing personally identifiable information (PII), allowing encrypted data to be processed without exposing sensitive information. For example, an encrypted model parameter update may contain information such as user preferences or personal attributes that require privacy protection. Authorizing the decryption of these parameters using the same homomorphic encryption algorithm ensures that the decrypted data remains secure throughout the processing stages. The method also integrates a machine learning model capable of accepting and processing input data containing PII. This model can be applied to various data types, such as user behavior data or biometric information, to generate meaningful output data.

"Explainability algorithm" refers to an algorithm that provides a human-understandable explanation of the decisions made by a machine learning model. This can include visualizations, feature importance scores, or natural language summaries. Explainability is crucial for trust, accountability, and transparency in AI systems, especially when dealing with sensitive data like PII. The explainability features of this claim involve the application of an explainability algorithm to the output data. This algorithm is designed to provide insights into the decision-making process of the machine learning model, making it accessible and understandable to users and stakeholders. The explainability algorithm therefore serves to build confidence in the model. The explainability algorithm can generate visualizations, summaries, or other forms of explanations that help users interpret the model's outputs and assess its performance. One of the significant technical advantages of this approach is the preservation of data privacy while allowing for the continuous improvement of machine learning models through parameter updates.

The utilization of homomorphic encryption ensures that sensitive information is protected, even during the model's training and adaptation phases.

Additionally, the application of an explainability algorithm to the output data facilitates transparency and trust in the machine learning process. By providing insights into the model's decision-making, the explainability feature enhances the model's accountability and interpretability, which are essential for industries where understanding the model's behavior is crucial .

Preferably, the above method involves receiving an encrypted model parameter update from a server device that aggregates the encrypted model parameter updates received from a plurality of user devices. This approach enables the centralized processing of encrypted data, promoting efficiency and scalability in machine learning applications.

The technical features of this method are highlighted by the ability of the server device to collect encrypted updates from multiple user devices. This aggregation process allows for a consolidated view of the model's learning progress, which can be beneficial in scenarios where the machine learning model is being trained on a large dataset from diverse sources. For example, consider a multinational corporation that operates in various geographical locations. Each location may have its own user devices contributing encrypted data updates. By aggregating these updates on a central server, the corporation can train a global machine learning model that reflects the collective insights of all its operations.

The technical advantages of this aggregated approach include improved model performance due to a larger and more diverse dataset, as well as the potential for faster convergence during the training process. Furthermore, this method supports the implementation of distributed machine learning systems, where data privacy and security are critical considerations. By centralizing the encrypted updates, the system can ensure that sensitive information remains confidential while still benefiting from the collaborative learning process.

Preferably, the above method encompasses deencrypting the model parameter update using a partial or a fully homomorphic encryption algorithm. This decryption step is a pivotal aspect of the overall process, as it allows for the decryption of encrypted data in a manner that maintains the security and privacy of the underlying information.

The technical features are characterized by the use of encryption algorithms that support homomorphic properties, enabling computations to be performed directly on encrypted data without needing to decrypt it first. For instance, a partially homomorphic encryption algorithm might allow for specific types of operations, such as addition and multiplication, to be performed on encrypted data. A fully homomorphic encryption algorithm, on the other hand, supports an unlimited number of such operations, providing a more comprehensive solution for secure data analysis. The technical advantages of employing homomorphic encryption algorithms for deencryption include enhanced data privacy, as sensitive information remains encrypted throughout the entire process.

This is particularly beneficial in scenarios where data is shared across different parties or systems, as it eliminates the need for intermediaries to access the raw data. Additionally, these algorithms facilitate secure computation on encrypted data, enabling collaborative machine learning models where multiple stakeholders can contribute to the model's training without compromising their data privacy. This is crucial in industries like healthcare, where patient data privacy is of utmost importance, and in cloud computing environments, where data security is a primary concern.

An aspect of the disclosure relates to a computer-implemented method of processing input data, which comprises receiving an encrypted model parameter update, wherein at least model parameters relating to personally identifiable information are encrypted using a homomorphic encryption algorithm, decrypting the encrypted model parameter update using the homomorphic encryption algorithm, applying the decrypted model parameter update to model parameters of a machine learning model, receiving, by the machine learning model, input data comprising personally identifiable information; processing, using a machine learning model, the input data to produce output data; and applying an explainability algorithm to the output data.

The key features of this method include the use of a homomorphic encryption algorithm to secure model parameters relating to personally identifiable information (PII), enabling encrypted data to be processed without exposing sensitive information. For example, an encrypted model parameter update may contain information such as user preferences or personal attributes that require privacy protection.

Authorizing the decryption of these parameters using the same homomorphic encryption algorithm ensures that the decrypted data remains secure throughout the processing stages.

The method also integrates a machine learning model capable of accepting and processing input data containing PII. This model can be applied to various data types, such as user behavior data or biometric information, to generate meaningful output data.

One of the significant technical advantages of this approach is the preservation of data privacy while allowing for the continuous improvement of machine learning models through parameter updates. The utilization of homomorphic encryption ensures that sensitive information is protected, even during the model's training and adaptation phases.

Preferably in the above method an explainability algorithm comprises at least one of the following techniques: SHAP (SHapley Additive exPlanations), LIME (Local Interpretable Model-agnostic Explanations), Grad-CAM (Gradient-weighted Class Activation Mapping), TCAV (Testing with Concept Activation Vectors), DeepLIFT (Deep Learning Important FeaTures), and selective decryption. This integration of explainability algorithms serves to enhance the transparency and interpretability of the machine learning model's decisions.

The technical features of this method are grounded in the inclusion of various explainability algorithms, each with its unique approach to providing insights into the model's behavior. For example, SHAP assigns importance values to individual features, allowing users to understand their impact on the model's predictions. LIME, on the other hand, creates local surrogate models that approximate the predictions of the complex model, making it easier to interpret the model's behavior for individual instances. Grad-CAM visualizes the areas of the input that are most influential for the model's decision, which is particularly useful in image recognition tasks. TCAV, DeepLIFT, and selective decryption offer additional perspectives on model interpretability, enabling users to gain a deeper understanding of the model's decision-making process.

The technical advantages of incorporating these explainability algorithms are manifold. They provide users with actionable insights into the model's behavior, fostering trust and confidence in the model's predictions. This is crucial in domains where the stakes are high, such as healthcare, finance, and autonomous systems, where understanding the rationale behind a model's decision can be as important as the decision itself. Moreover, these algorithms can help identify and rectify biases or errors in the model, leading to more accurate and fair outcomes. Overall, the integration of explainability algorithms with the previously described methods contributes to a holistic approach to privacy-preserving, secure, and interpretable machine learning.

An aspect of the disclosure relates to a machine learning model designed for processing input data, which includes personally identifiable information (PII), and is particularly utilized within the method outlined in the above. This model comprises a decryption module, an input layer, intermediate and output layers, and an explainability module.

The features of this machine learning model are defined by the interconnected components that work together to process PII-containing input data while ensuring data privacy and explainability. The decryption module plays a critical role by decrypting model parameter updates encrypted under the aforementioned homomorphic encryption algorithms. It then utilizes these decrypted updates to refine the model parameters, enabling the model to evolve and improve over time without compromising the confidentiality of the underlying data.

Functionally, the input layer of the model receives the input data, which may include PII, and passes it through intermediate layers. These layers are responsible for processing the input and extracting relevant features, while the output layer generates the final output data. The output data may include predictions, classifications, or other actionable insights derived from the input data.

The explainability module is a feature that provides insights into the model's decision-making process. It utilizes various explainability algorithms, as previously discussed, to generate explanations for the output data. This enables users to understand the rationale behind the model's predictions, particularly when dealing with PII-laden data. The explanations can help users to interpret the model's behavior, detect potential biases or errors, and foster trust in the model's outputs.

The technical advantages of this machine learning model are significant. Firstly, it ensures the privacy of PII by leveraging encrypted communication between the server and the user devices, as well as within the model's update process. Secondly, it enhances the model's interpretability, which is crucial for sensitive applications where understanding the model's reasoning is as important as the accuracy of its predictions. Finally, the integration of explainability modules with the decryption and update mechanisms provides a comprehensive approach to secure and transparent machine learning, enabling users to maintain control and understanding over the model's operations.

An aspect of the disclosure relates to a computer-implemented method for training a machine learning model, specifically the model described above, which is used to process PII on a user device. This method involves local training of a machine learning model with PII-containing data, followed by a collaborative training process with a global model hosted on a server.

The method's features include local processing of training data on the user device, generating output training data and computing model parameter updates using an objective function that measures the difference between the output training data and the annotations. After training, the user device may apply explainability algorithms on the locally trained model to understand how it behaves on the user's own data for verification. The model parameter updates are then encrypted to maintain privacy during transmission. These encrypted updates are sent to a server device, which aggregates the updates from multiple user devices. The server device decrypts and applies the aggregated updates to the local machine learning model's parameters. Upon completion of the training process, an explainability algorithm is applied to the trained model to ensure the interpretability of the outcomes.

"Training data" refers to any kind of data that is used during learning or training phases of machine learning models. When the machine learning model is trained using a supervised training algorithm, the training data comprises input data and corresponding annotations.

"Input training data" refers to data that is used to train a machine learning model. In the context of federated learning, input training data refers to the locally stored, encrypted data on individual devices that is used to update the global model without revealing the underlying data to the central server or other devices.

"Output training data" refers to the set of locally computed data, which may include aggregated or derived information, that is generated during the federated learning process. This data is used to update the global model and does not include raw PII but may still require privacy protection measures.

"Annotation" refers to a tag or metadata provided together with input data, wherein the annotation is used during a learning or training phase of a machine learning model to adapt the output of the respective machine learning model to learn desired patterns or relationships in the respective input training data. Specifically the annotations correspond to the respective desired result.

The technical advantages of this method are multifaceted. Privacy is preserved throughout the training process by encrypting the model parameter updates, ensuring that PII is not exposed during transmission or storage. Collaborative training enables the local models to benefit from a more extensive data pool and diverse perspectives, potentially improving model accuracy and robustness. Finally, the application of an explainability algorithm to the trained model provides transparency and trust in the model's decisions, which is particularly important for models that handle sensitive PII. This ensures that users can understand and verify the model's behavior, fostering greater acceptance and reliance on the system.

Preferably the above method enhances the security and traceability of the encrypted model parameter updates used in the collaborative training process described above. By committing these updates to a blockchain, the method introduces a decentralized ledger that records all transactions in a tamper-evident and immutable manner.

Technical features of this blockchain-based approach include the creation of a secure, permanent record of the encrypted model parameter updates. Each update, once added to the blockchain, becomes part of an unalterable chain of blocks, ensuring that the data cannot be changed retroactively. This provides a verifiable audit trail of the model's evolution, which is particularly valuable for accountability and regulatory compliance.

The technical advantages include increased security against unauthorized access. The blockchain's distributed nature also mitigates the risk of a single point of failure or control, which is a common vulnerability in centralized systems. Furthermore, the inherent transparency and immutability of blockchain technology enhance trust among stakeholders. This method ensures that all parties can independently verify the integrity of the model's updates and the training process, bolstering confidence in the system's outputs and decisions.

In the realm of blockchain solutions, a variety of platforms have emerged, each with its unique set of features, advantages, and target industries. Bitcoin, as the pioneering cryptocurrency, introduced the concept of blockchain for secure and decentralized transaction recording. Ethereum expanded the blockchain's utility by enabling smart contracts and decentralized applications (DApps), while also offering its native cryptocurrency, Ether.

Hyperledger Fabric stands out as an enterprise-focused blockchain framework, with a strong emphasis on privacy, performance, and scalability, catering to the needs of businesses seeking blockchain integration. Ripple's blockchain facilitates rapid, secure financial transactions, serving as a real-time gross settlement system and currency exchange network.

EOS.IO, with its high-performance architecture, addresses scalability and speed, making it suitable for applications requiring extensive transaction throughput. Cardano prioritizes sustainability and financial inclusion, aiming to provide a versatile platform for global financial services.

Chainlink, as a decentralized oracle network, bridges the gap between smart contracts and external data sources, allowing smart contracts to interact with the real world and access off-chain information. Corda, designed specifically for the financial industry, emphasizes privacy, security, and scalability, offering a tailored solution for financial institutions.

Stellar, a non-profit organization, strives to connect the financial world by utilizing blockchain technology to create a global network of banks and payment providers. TRON, on the other hand, seeks to revolutionize social media, content creation, and entertainment by offering an open, decentralized, and accessible platform.

These diverse blockchain solutions cater to a wide range of industries and applications, from cryptocurrency and financial services to smart contracts and decentralized applications. Each platform contributes to the growing landscape of blockchain technology, offering unique advantages and catering to the specific needs of its target audience.

Incentivizing user devices, often called miners, in blockchain networks, is a fundamental aspect that contributes to the overall health and functionality of the system. These incentives, often in the form of cryptocurrency rewards and transaction fees, serve to maintain network security, promote decentralization, foster innovation, stimulate economic growth, and ensure scalability.

Network security is of paramount importance in blockchain technology, and incentives play a critical role in encouraging participation and vigilance among participants. A robust network of active miners or validators diligently working to solve complex mathematical problems or validate transactions increases the difficulty for malicious actors to disrupt the network or execute attacks such as double-spending.

Decentralization is another key advantage brought about by incentives. By distributing rewards across a broad base of participants, blockchain networks avoid the concentration of power in the hands of a few. This diversity of stakeholders helps to ensure that the network remains resilient and trustworthy, as no single entity has control over the majority of computational power or staking resources.

The incentive-driven competition among participants also spurs innovation and technological advancements. As individuals and organizations strive to optimize their devices' efficiency and energy consumption to maximize their rewards, this competition leads to the development of more sophisticated hardware and software solutions. Such innovations not only improve the performance of blockchain networks but also have broader implications for the hardware and software industries.

Furthermore, the incentives provided by blockchain networks have a significant impact on economic growth. They create new markets and opportunities, as various industries, including hardware manufacturers, software developers, and service providers, benefit from the increasing demand for products and services related to blockchain technology.

Lastly, incentives are crucial for ensuring the scalability of blockchain networks. As the number of transactions and users on the network grows, maintaining the network's capacity to handle this increased load is essential. In PoS systems, in particular, validators play a vital role in scaling the network, and their participation is incentivized to support the network's growth.

In conclusion, the incentive mechanisms within blockchain networks are instrumental in maintaining network security, promoting decentralization, fostering innovation, stimulating economic growth, and ensuring scalability. These factors collectively contribute to the robustness and resilience of blockchain systems, making them a viable and valuable solution for a wide range of applications in the digital landscape.

An aspect of the disclosure relates to a computer-implemented method for training a machine-learning model to process personally identifiable information (PII) on a server device, specifically the machine-learning model described in claim 5. This method involves receiving encrypted model parameter updates from multiple user devices hosting local machine-learning models. These updates are then aggregated to update the global machine-learning model on the server. The aggregated updates are computed based on the encrypted updates from the local models and the global model's parameters. Subsequently, these aggregated updates are encrypted and sent back to the user devices. Upon completion of the training process, an explainability algorithm is applied to the trained machine-learning model to ensure the explainability of the output data.

Initially, multiple user devices equipped with local machine-learning models contribute to the training process. The user devices can inspect local explainability results to determine whether the model is making sensible predictions based on the client's data. The multiple user devices may encrypt their model parameter updates. This encryption ensures the confidentiality of the data as it is transmitted to the server device. The server device then aggregates these encrypted updates, along with its pre-existing global model parameters, to update the global machine-learning model. This aggregation step combines the learning from various devices, enhancing the global model's ability to make accurate predictions.

Following aggregation, the server device encrypts the aggregated model parameter updates once more before sending them back to the user devices. This double encryption process guarantees that sensitive information remains secure throughout the entire training cycle.

Upon completion of the training, the server device deploits an explainability algorithm on the trained machine-learning model. This algorithm is crucial for interpreting the model's output data, making it transparent and understandable for users. It also builds trust in the model's decision-making process, particularly when dealing with PII, where accountability is key.

In summary, the method described herein offers a secure, effective, and transparent way to train a machine-learning model for processing PII on a server device. By incorporating encryption, aggregation, and explainability, the method addresses critical concerns such as data privacy, model performance, and trustworthiness.

An aspect of the disclosure relates to a computer-implemented method for generating training data specifically for a machine-learning model referenced in claim 8. This method focuses on collecting input training data that includes personally identifiable information (PII) and its corresponding annotations, while maintaining data privacy through homomorphic encryption. The method then provides this data as encrypted training data, which can be securely transmitted to a server device for model parameter updates.

The features of this method can be elaborated upon with the following examples and explanations: Collecting PII and annotations: The method begins by gathering input training data that contains PII along with annotations that describe the data. This step is essential for enabling the machine-learning model to learn from real-world examples and contextual information. Homomorphic encryption: To ensure the privacy of both the input training data and annotations, the method employs homomorphic encryption. This advanced encryption technique allows computations to be performed on encrypted data without the need to decrypt it, thereby securing the data throughout the entire process. Providing encrypted training data: Once the data is collected and encrypted, the method presents the combination of the encrypted input training data and its annotations as the training data. This encrypted data can then be sent to a server device for further processing without compromising the privacy of the underlying information.

The technical advantages of this method include: Enhanced data privacy: Homomorphic encryption allows for secure data processing, ensuring that PII and annotations remain confidential even when used for training machine-learning models. Improved model accuracy: By providing the model with annotations alongside the encrypted PII, the method enriches the training data, which can lead to more accurate and reliable machine-learning models. Secure data sharing: The ability to transmit encrypted training data without decrypting it enables secure sharing of data between devices, facilitating collaborative training efforts while maintaining stringent privacy standards.

In essence, this method addresses the need for privacy-preserving data generation for machine-learning models, while also enhancing model accuracy and enabling secure data sharing in a world where data privacy is paramount.

An aspect of the disclosure relates to a set of training data specifically designed for use in the training of the above mentioned machine learning models. The methodology for creating this set of training data is closely aligned with the principles laid out in the above method for generating training data.

The training data is characterized by its inclusion of input training data and annotations, both of which contain personally identifiable information (PII). The PII and annotations are collected from local devices, such as personal computers or mobile devices. To preserve the privacy of the PII, both datasets undergo encryption using homomorphic encryption. This advanced cryptographic technique permits computations on encrypted data, thus enhancing privacy protection.

For example, consider the collection of educational records and related annotations from a student's learning management system, which contains PII. The encrypted data, including grades and personal details, can now be utilized to train a model that predicts academic success without compromising student privacy.

The benefits of the training data thus provided are considerable. It enables the development of machine-learning models that can adeptly handle PII while upholding privacy standards. By leveraging homomorphic encryption, this approach allows for the secure exchange of data across various parties, fostering collaborative efforts in research and innovation. This method is crucial for advancing secure machine learning practices, providing a framework for managing and utilizing sensitive data responsibly in a data-driven environment.

A further aspect of this disclosure relates to one or a plurality of data processing apparatus' comprising means for carrying out the above described methods.

A further aspect of this disclosure relates to a computer program comprising instructions which, when the program is executed by a computer, cause the computer to carry out the above described method.

A further aspect of this disclosure relates to a computer-readable medium comprising instructions which, when executed by a computer, cause the computer to carry out the above described method.

### BRIEF SUMMARY OF THE FIGURES

The invention is explained in more detail below on the basis of the examples illustrated in the figures. The figures show in:
- FIG. 1 illustrates an aspect of the subject matter in accordance with one embodiment;
- FIG. 2 illustrates an aspect of the subject matter in accordance with one embodiment;

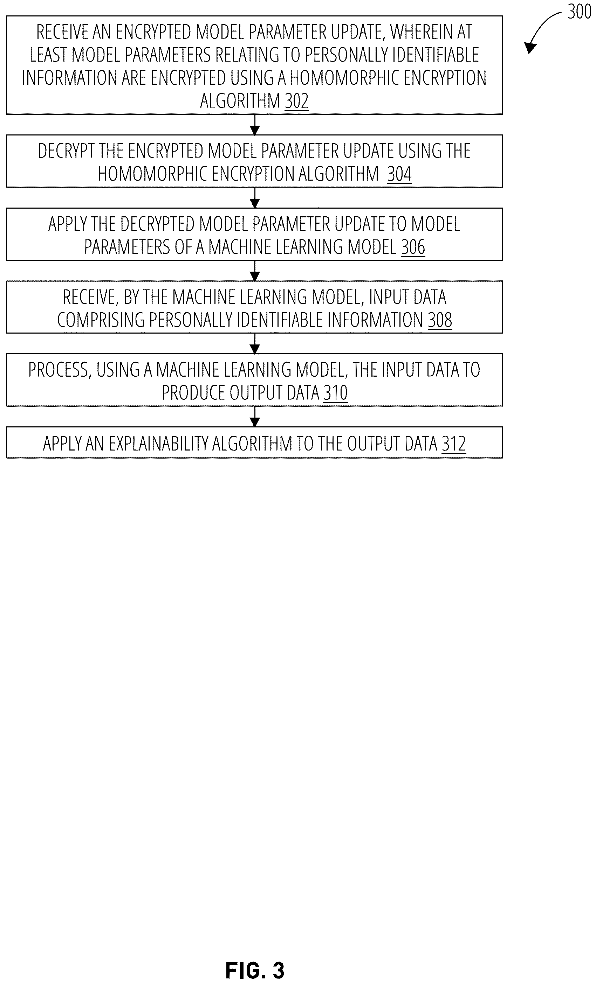

- FIG. 3 illustrates a method 300 in accordance with one embodiment;
- FIG. 4 illustrates a routine 400 for processing personally identifiable information on a user device, in particular the machine-learning model of claim 5, in accordance with one embodiment; and

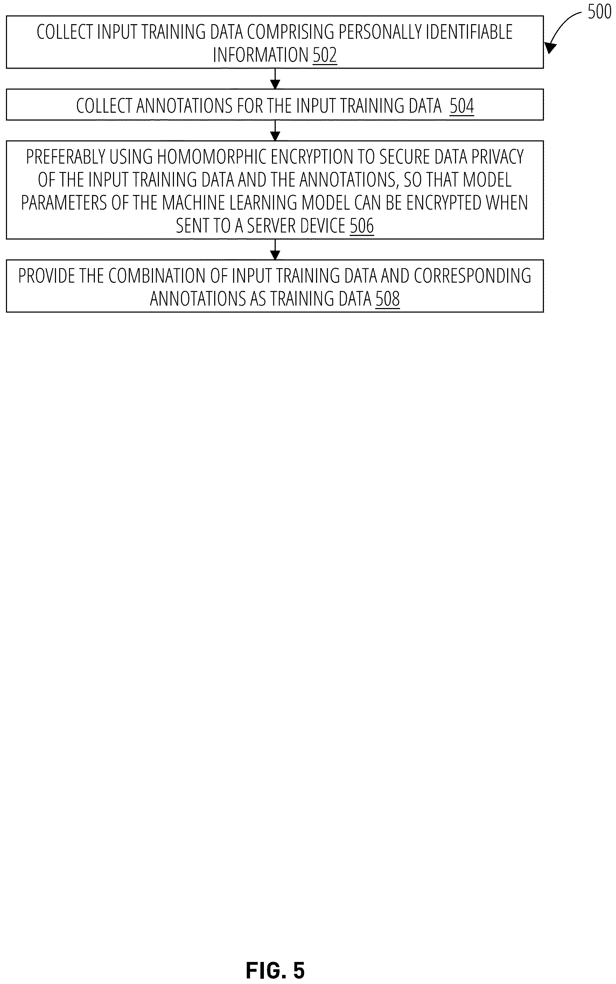

- FIG. 5 illustrates a method 500 in accordance with one embodiment.

### DETAILED DESCRIPTION OF THE EMBODIMENTS

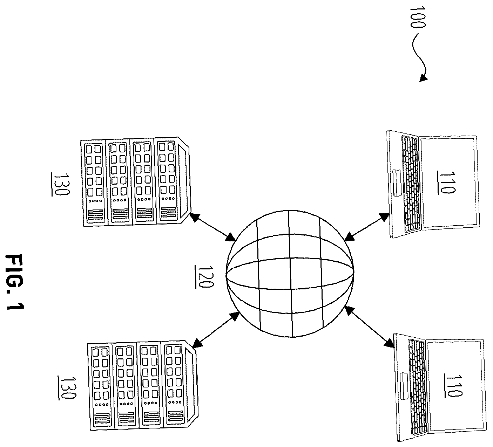

The system 100 as shown in Fig.1 encompasses a comprehensive infrastructure designed to facilitate the federated learning process. This system includes a plurality of user devices 110, a network 120, and one or more server devices 130. Each user device 110 is capable of executing machine learning models and participating in the federated learning process. The network 120 provides the communication backbone that connects user devices 110 with server devices 130.

User Devices 110: The user devices 110, such as personal computers, smartphones, or IoT devices, play a crucial role in the federated learning system. They store application data and processing data, and execute machine learning models. When a user device 110 wants to participate in the federated learning process, it sends a query to the server devices 130 via the network 120. On the other hand, the user devices 110 may also be specialized servers, e.g. servers providing a database for a hospital or for a company or the like, the user devices 110 may even be high performance computers specialized in running and training neural networks, nevertheless, the plurality of user devices 110 in such a scenario use the server devices 130 as described below. Using implementations in which smartphones or personal computers are used are also called edge computing.

Edge computing is a distributed computing paradigm that brings computation and data storage closer to the location where it is needed, significantly improving response times and reducing bandwidth usage. Its primary advantage is the reduction in latency, offering immediate processing capabilities crucial for real-time applications such as autonomous vehicles, IoT devices, and mobile applications. Additionally, edge computing enhances privacy and security by processing sensitive data locally, thereby minimizing the risk of data breaches during transmission. While edge computing requires robust local infrastructure and complex management, it is increasingly becoming an essential component of modern computing architectures, providing a scalable and secure framework for distributed applications.

Alternatively, as already mentioned above, the user devices 110 may also be specialized servers for AI computations.

A user device 110 may e.g. send a query to a server device 130 to receive initial model parameters or updated model parameters for training or inference respectively.

Server Devices 130: The server devices 130 are responsible for aggregating and updating the machine learning models based on the received model parameter updates from the user devices 110. The server devices 130 may be mirrors of one another, meaning they have identical copies of the machine learning models and parameters, or they may be different instances or part of a distributed system. In some cases, the system may comprise more than two server devices 130. These server devices 130 can communicate with each other and with the user devices 110 via the network 120.

Mirror Server Devices: When server devices 130 are mirrors of one another, it means that they have identical copies of the machine learning models and parameters. This configuration can be beneficial in certain scenarios, such as redundancy and fault tolerance. If one server device 130 fails or experiences an outage, the other mirror server device 130 can continue to participate in the federated learning process without interruption.

Distributed Server Devices: In a distributed system, the server devices 130 may have different instances of the machine learning models and parameters. Each server device 130 may receive model parameter updates from the user devices 110 and contribute to the aggregated model update. This approach enables scalability and flexibility, as the system can accommodate a larger number of user devices 110 and server devices 130.

In summary, the system 100 comprises a plurality of user devices 110, a network 120, and one or more server devices 130. User devices 110 send queries to server devices 130 via the network 120, and the server devices 130 update the machine learning models based on the received model parameter updates. The server devices 130 may be mirrors of one another or part of a distributed system, providing redundancy, scalability, and fault tolerance to the federated learning process.

There are several federated learning algorithms that might be applied to the above federated learning process, each with its own benefits: The most common algorithm is Federated Averaging (FedAvg), which involves training local models on client data and then averaging the updated models to create a global model. The benefits of FedAvg include its simplicity, scalability, and privacy preservation.

Another variant of FedAvg is Federated Stochastic Gradient Descent (FedSGD), which utilizes gradient updates instead of model updates. This algorithm offers benefits such as reduced communication overhead and improved convergence properties. Written by Rowan AI Chat, an expert in scientific, technical, engineering, and related fields.

Federated Hyperband (FedHyb) is based on the Hyperband algorithm for hyperparameter tuning in a federated setting. It maintains the advantages of Hyperband while improving communication efficiency and scalability.

Federated Prediction (FedPred) is designed specifically for prediction tasks in federated learning. By combining local predictions to make a global prediction, FedPred reduces communication overhead and improves model performance.

Federated Averaging with Weighted Averaging (FedWA) introduces weighted averaging in the global model update process. This method allows models with more data to have a greater influence on the global model, resulting in improved performance.

Federated Learning with Attention (FedAtt) leverages the attention mechanism to focus on relevant features during model updates. This approach can enhance model accuracy and reduce communication overhead.

Personalized Federated Learning (PFL) allows clients to personalize the global model to their needs, providing a tailored solution for each client. This can lead to better model performance on specific tasks.

Federated Learning with Gradient Compression (FLGC) utilizes gradient compression techniques to reduce the size of model updates during communication. This helps to minimize the communication overhead and improve efficiency.

Cross-silo federated learning is a variant of federated learning designed for scenarios where multiple organizations collaborate on a shared task while keeping their data private and secure. In this setting, each participating organization, referred to as a 'silo', trains a local model on its own data and then contributes the model updates to a central server. The central server aggregates these updates to improve a global model, which is then shared back with the silos. This approach enables organizations to benefit from shared knowledge and insights while retaining control over their sensitive data. The key challenges in cross-silo federated learning include communication efficiency, privacy preservation, and trust among participating entities. To address these challenges, various techniques such as secure aggregation, differential privacy, and consensus algorithms are employed to ensure data privacy, model accuracy, and robustness of the collaborative learning process.

In summary, federated learning algorithms offer a variety of benefits, including scalability, communication efficiency, privacy preservation, and accuracy. The choice of algorithm depends on the specific use case and data distribution.

From an implementation point of view there may be two approaches: synchronous and asynchronous federated learning. Each has its own set of benefits. Synchronous federated learning involves all user devices 110 (e.g., devices or organizations) synchronously sending their model updates to the server device 130 at regular intervals. This approach ensures that all updates are based on the most recent data, leading to a more consistent and accurate global model. However, it can be slower due to the need for all user devices 110 to be synchronized and can be challenging to manage in cases where the user devices 110 have varying computational capacities. On the other hand, asynchronous federated learning allows user devices 110 to send their model updates to the server device 130 at their own pace, without waiting for others. This approach is more flexible and can be faster, as it accommodates user devices 110 with different computational resources and data availability. However, it may result in a less accurate global model due to the potential for outdated data in some updates. Despite these trade-offs, asynchronous learning can be more robust in environments with diverse user device capabilities and can improve overall system efficiency. Both synchronous and asynchronous learning methods can be enhanced with techniques like secure aggregation and differential privacy to balance the benefits of consistency and efficiency with the need for privacy and data security.

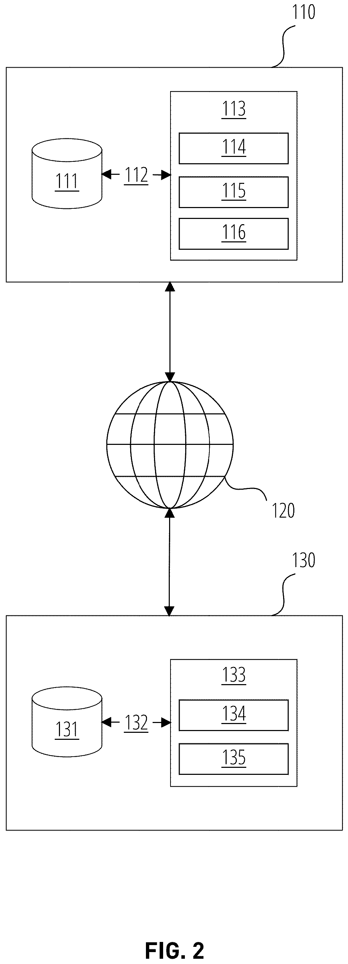

FIG. 2 shows a more detailed view of the server devices 130 and the user devices 110.

The server device 130 is a key component of the federated learning system, responsible for aggregating and updating the machine learning models based on the received model parameter updates from the user devices 110. The server device 130 comprises at least a storage module 131 and a processing module 133, which are connected via a communication channel 132.

The storage module 131 is responsible for storing the model parameters and other data related to the machine learning models. It serves as a central repository for all the model parameter data collected from the user devices 110. The storage module 131 ensures that the data remains consistent and accessible for processing and updating the machine learning models.

The processing module 133 handles the execution of the model parameter update application 134 and the blockchain blockchain application 135. The model parameter update application 134 collects and processes the model parameter updates received from the user devices 110, and updates the machine learning models accordingly, by sending the aggregated model parameter updates back to the user devices. The blockchain application 135, on the other hand, ensures the integrity and traceability of the model parameter updates distributed to the user devices 110. It logs and commits the model parameter updates to the blockchain application 135, which provides an immutable and transparent record of the updates. The term "blockchain application" refers to a distributed database that maintains a continuously growing list of records, called blocks, which are linked using cryptography. Each block contains a cryptographic hash of the previous block, a timestamp, and transaction data. Blockchain applications can be used for secure, transparent, and tamper-proof transactions. Examples include cryptocurrencies like Bitcoin, smart contracts on platforms like Ethereum, and supply chain management systems.

The communication channel 132 establishes a logical connection between the storage module 131 and the processing module 133. This connection allows data to be transferred between the two modules for processing and storage. The communication channel 132 can be established through various means, such as wired connections (e.g., Ethernet), wireless connections (e.g., Wi-Fi), or bus systems. The choice of connection depends on the specific requirements and constraints of the system.

The federated learning algorithm is responsible for collecting model parameter updates from the user devices 110 and aggregating them on the server device 130. This distributed approach to machine learning allows the user devices 110 to maintain their privacy, as they do not need to send their raw data to the server device 130. Instead, the user devices 110 only send the model parameter updates, which are then used to update the machine learning models.

To maintain data privacy, the server device 130 does not store any processing data from the user devices 110. This ensures that the PII of the user devices remains strictly confidential. By keeping the data processing of the PII localized to the user devices 110, the federated learning system upholds data privacy and security.

In summary, the server device 130 comprises a storage module 131, a processing module 133, and a communication channel 132. The storage module 131 stores the model parameter data, while the processing module 133 executes the model parameter update application 134 and the blockchain application 135. The communication channel 132 facilitates communication between the storage and processing modules, and the federated learning algorithm aggregates model parameter updates from the user devices 110 without compromising data privacy.

The user device 110 is another integral part of the federated learning system 100, responsible for processing application data and generating model parameter updates. It comprises at least a storage module 111 and a processing module 113, which are connected via a communication channel 112. The user device 110 ensures the privacy of the PII by processing it locally and only sending model parameter updates to the server device 130.

The storage module 111 is responsible for storing application data and processing data. The application data may include user input, configuration settings, and other relevant information required for the machine learning model 114. The processing data may include the PII that needs to be processed by the machine learning model 114. The storage module 111 ensures that the data remains secure and is only accessed by the processing module 113 when necessary.

The processing module 113 is responsible for executing the machine learning model 114, the homomorphic encryption application 115, and the explainability algorithm 116. The machine learning model 114 is designed to process the PII and generate model parameter updates. The homomorphic encryption application 115 encrypts the model parameters to prepare an encrypted model parameter update to ensuring the privacy and security of the PII. The explainability algorithm 116 provides transparency and interpretability of the processed PII data to the users of the user device 110.

The communication channel 112 is a logical connection between the storage module 111 and the processing module 113. It enables the transfer of data required for processing and training the machine learning model 114. The communication channel 112 can be established using various technologies, such as wired connections (e.g., Ethernet), wireless connections (e.g., Wi-Fi), or bus systems, depending on the specific requirements of the system.

The machine learning model is designed for processing input data containing the PII consists of several components, each serving a specific purpose in the data processing pipeline. The model is structured to receive input data, encrypt, using either a partial or a fully homomorphic encryption, the PII, perform processing and generate output data, and provide explainability for the output.

The homomorphic encryption application 115 can be seen as part of the machine learning model, and is a critical component of the machine learning model, designed to secure the PII by encrypting at least those parts of the model parameter updates that relate to PII. The encryption module employs advanced cryptographic techniques, such as homomorphic encryption, to ensure that the PII remains confidential and secure throughout the processing pipeline. Homomorphic encryption allows the system 100 to perform computations on encrypted data, e.g. aggregating model parameter updates on the server device without decrypting it, thus maintaining the privacy of the PII.

The machine learning model 114 for handling input data, which may contain PII, is described herein. The model. The model includes an encryption module that utilizes the homomorphic encryption application 115 to securely decrypt encrypted model parameter updates received from the server device 130, thereby allowing the encrypted data to be processed to update the model parameters to in turn process the input data. This encryption ensures privacy while enabling computation on encrypted data.

Further, the model incorporates a layered neural network architecture, with an input layer designed to accept the input data. Subsequent intermediate and output layers are configured to process the input data, and the final output layer provides the processed data. An explainability module is integrated into the model, which is responsible for generating explanations of the model's output. This module enhances the interpretability and transparency of the model's decisions.

The homomorphic encryption allows for computations to be performed on ciphertexts, generating an encrypted result that, when decrypted, matches the result of operations performed on the plaintext. This is crucial for privacy-preserving machine learning, as it enables training models without exposing sensitive data.

The model is trained across multiple decentralized devices or servers holding local data samples, without exchanging them. This collaborative approach allows for the construction of a robust machine learning model while maintaining data privacy.

The machine learning model may leverage various data types, including structured data, unstructured data, and time-series data. For instance, structured data may consist of tabular data with labeled features, unstructured data could encompass text, images, and audio, while time-series data involves sequences of measurements over time.

The explainability algorithm 116 of the machine learning model 114 for processing PII can employ various algorithms to provide insights into the model's decision-making process and the factors influencing the output data. These algorithms help users understand how the model processes the input data and how it translates it into the output. Some popular explainability algorithms include:
- SHAP (SHapley Additive exPlanations): SHAP is a game-theoretic approach that assigns each feature an importance value based on its contribution to the model's output. SHAP values are calculated using Shapley values, which are derived from cooperative game theory. SHAP provides a consistent and interpretable way to explain the output of any machine learning model. HAP is particularly useful for models that have a complex, non-linear relationship between input features and output predictions, such as deep learning models.
- LIME (Local Interpretable Model-Agnostic Explanations): LIME is a local, model-agnostic algorithm that generates explanations for individual predictions. It does this by perturbing the input data and observing the changes in the output, then constructing a simple, interpretable model (e.g., linear regression) to approximate the behavior of the original model near the perturbed input. LIME is particularly useful for models that are black-box, as it provides interpretability without requiring access to the model's internal workings.

- Grad-CAM (Gradient-weighted Class Activation Mapping): Grad-CAM is a visualization technique that uses the gradients of the target class with respect to the last convolutional layer to produce a heat map that highlights the regions of the input data that are important for the model's decision. Grad-CAM is particularly useful for image classification models and helps users understand the model's focus areas.
- TCAV (Testing with Concept Activation Vectors): TCAV is a method that associates each concept with a set of activation vectors from the deep layers of a neural network. By using these activation vectors, TCAV evaluates the impact of a concept on the model's output and generates explanations for individual predictions. TCAV is useful for understanding the model's behavior in relation to specific concepts, such as image classification models, as it helps users understand the model's behavior in relation to specific concepts.
- DeepLIFT (Deep Learning Important FeaTures): DeepLIFT is a contrastive explanation method that calculates the contribution of each input feature to the final prediction by comparing the model's output with a reference output (e.g., the output of a baseline model). DeepLIFT assigns importance values to each feature based on its influence on the prediction. DeepLIFT is useful for models that have complex, non-linear relationships between input features and output predictions, such as deep learning models.
- Selective Decryption: In addition to the explainability algorithms mentioned above, some machine learning models may incorporate a selective decryption feature. This feature allows the model to decrypt only a subset of the encrypted PII, providing explanations for specific parts of the input data. Selective decryption can be achieved by using techniques such as differential privacy, where only partial information about the PII is revealed to the explainability algorithm, thus preserving the privacy of the users.

In summary, a machine learning model for processing PII can use explainability algorithms such as SHAP, LIME, Grad-CAM, TCAV, and DeepLIFT to provide insights into the model's decision-making process and the factors influencing the output. Additionally, a selective decryption feature can be included to preserve user privacy while generating explanations for specific parts of the input data.

To ensure the model's decisions are interpretable, different explainability algorithms can be applied. These algorithms may include techniques such as Local Interpretable Model-agnostic Explanations (LIME), Shapley Additive Feature Decomposition (SHAP), or Partial Dependence Plots (PDP). Each of these methods provides insights into how different features contribute to the model's predictions, thereby allowing users to understand and trust the model's output.

A machine learning model for processing input data comprising personally identifiable information comprising: a decryption module to decrypt a model parameter update and use the decrypted model parameter update to update model parameters of the machine learning model, an input layer configured to receive the input data, intermediate and output layers configured to process the input data comprising the personally identifiable information and generate output data, and an explainability module configured to explain the output data.

The machine learning model 114 is designed to handle input data that includes personally identifiable information (PII) in a secure and interpretable manner. The model architecture and functionality are explained below. The machine learning model 114 comprises a decryption module, an input layer, intermediate and output layers and an explainability module. The decryption module plays a pivotal role in maintaining data privacy and model integrity. After receiving encrypted model parameter updates from the server device, the decryption module decrypts these updates using the homomorphic encryption application 115. The decrypted model parameter update is in turn applied to the machine learning model 114 on the user device 110, allowing for continuous learning and adaptation without exposing sensitive information.

The input layer is the initial point of contact for the input data, which includes PII. It is responsible for receiving and preparing the data for further processing by the model. This layer must be capable of handling various data formats and structures while ensuring that PII is appropriately managed.

The intermediate and output Layers are tasked with processing the input data, which contains PII, through a series of transformations and computations. The intermediate layers typically extract and refine features from the data, while the output layers generate the final output data. The model's ability to process PII effectively is crucial for generating accurate predictions and insights.

PII encompasses a broad range of data that can be used to identify an individual. In the context of machine learning models, PII typically includes but is not limited to:
Name, address, and contact information: This may include full names, home addresses, email addresses, and phone numbers; Demographic information: Age, gender, race, and ethnicity; Biometric data: Fingerprints, facial recognition, voice patterns, and DNA sequences; Financial details: Credit card numbers, bank account information, and transaction histories; Health records: Medical history, prescriptions, and insurance information.

To process PII within machine learning models effectively, the following steps are generally taken: Data Annotation: Annotators label the PII data with relevant information that helps the model understand the context and significance of the data. For example, annotators might label a photograph with tags that identify individuals present in the image; Data Preprocessing: This involves cleaning the data, handling missing values, and normalizing it to ensure consistency and accuracy. Techniques such as tokenization, stemming, and lemmatization are often used to prepare textual data; Feature Engineering: This step involves selecting and constructing features that can help the model make better predictions. For instance, extracting numerical features from text data, such as word counts or TF-IDF scores, can be beneficial for text classification tasks; Model Training: The preprocessed and annotated PII data is fed into machine learning algorithms to train the model. During this phase, the model learns to recognize patterns and relationships within the data, enabling it to make predictions or classify new, unseen data; Model Evaluation: The trained model is tested against a separate set of data (validation set) to evaluate its performance. Metrics such as accuracy, precision, recall, and F1-score are used to assess the model's ability to process PII effectively.

Machine learning models improve the processing of PII in several ways:Automation: Machine learning automates the analysis of large volumes of PII, which would be impractical to process manually; Pattern Recognition: Machine learning models can identify complex patterns and relationships within PII data that might be invisible to human analysts; Anomaly Detection: They can detect anomalies or outliers in PII data that could indicate fraudulent activity or data breaches; Enhanced Decision-Making: By learning from diverse PII datasets, machine learning models can support more informed and data-driven decision-making processes; Personalization: Machine learning can leverage PII to provide personalized experiences and recommendations, enhancing user engagement and satisfaction; Overall, machine learning models offer a powerful toolset for processing PII, enabling organizations to derive value from their data while maintaining privacy and compliance with regulatory standards.

Particularly in medical applications, the processing of PII is focused on protecting patient privacy while enabling the advancement of healthcare services.

The types of PII processed in medical applications include:
- Patient Identification Data: This is a broad category that encompasses all the information used to uniquely identify a patient. It includes:
   ∘ Name: Full name, including any aliases.
   ∘ Date of Birth (DOB): To confirm the patient's age and identity.
   ∘ Gender: To understand the patient's biological sex or gender identity.
   ∘ Address: To locate the patient's residence for service delivery and contact purposes.
   ∘ Contact Information: This includes phone numbers, email addresses, and emergency contacts.
- Medical History: Detailed records of a patient's past medical events, treatments, surgeries, and diagnoses. This can include:
   ∘ Chronic Conditions: Long-term health issues such as diabetes, hypertension, or arthritis.
   ∘ Medication History: Records of prescribed and over-the-counter medications.
   ∘ Allergies: Information about any known allergies to medications, foods, or environmental factors.
- Demographic Data: Information that helps categorize patients into specific groups for research or treatment purposes, such as age, race, ethnicity, and socioeconomic status.
- Imaging and Lab Results: Medical images like X-rays, MRIs, and CT scans, as well as laboratory test results, are processed and analyzed to assist in diagnosis and treatment planning.
- Genetic Information: This includes data derived from genetic testing, which can be highly sensitive and personal.
- Electronic Health Records (EHRs): Comprehensive records that include all the information mentioned above and more, often stored in digital format.

In medical applications, the processing of PII must comply with strict regulations like the Health Insurance Portability and Accountability Act (HIPAA) in the United States, which sets the standard for protecting sensitive patient data.

Machine learning models play a crucial role in processing this PII by:
- Improving Diagnostics: Models can analyze medical images and test results to assist in early and accurate diagnosis.
- Enhancing Treatment Planning: By analyzing patient histories and demographic data, models can help tailor treatment plans to individual needs.
- Predictive Analytics: Machine learning can predict patient outcomes, readmission risks, and potential health issues by analyzing patterns in historical data.
- Personalized Medicine: Models can help in the development of personalized treatment plans based on a patient's unique genetic makeup and medical history.
- Remote Monitoring: Wearables and IoT devices generate continuous streams of health data that can be analyzed by machine learning models to monitor patient health in real-time.

Ensuring the privacy and security of PII in medical applications is paramount, and machine learning models must be designed and deployed with robust safeguards to maintain patient trust and comply with legal requirements.

Furthermore, the machine learning model 114 comprises the explainability module aims to provide insights into how the model arrived at its predictions, particularly when dealing with PII. By offering explanations for the output data, the explainability module enhances transparency, builds user trust, and aids in compliance with regulations that mandate the understanding of automated decision-making processes.

In practice, this machine learning model structure ensures that PII is handled responsibly while maintaining high-quality predictions. The decryption module safeguards against unauthorized access to sensitive updates, the input, intermediate, and output layers manage PII with precision, and the explainability module demystifies the model's operations, offering a comprehensive solution that balances performance with privacy and accountability.

A machine learning model for processing input data comprising personally identifiable information comprising an input layer configured to receive the input data, an encryption module to encrypt the personally identifiable information, intermediate and output layers configured to process the input data and the encrypted personally identifiable information and generate output data, and an explainability module configured to explain the output data, the explainability algorithm comprises at least one of: SHAP, LIME, Grad-CAM, TCAV, DeepLIFT, a selective decryption.

The user device 110 participates in the federated learning process by running a training algorithm to train the machine learning model 114 to perform a desired processing of the PII. During the training stage, the user device 110 generates model parameter updates. The user device 110 may execute one or more explainability algorithms (e.g., any one or more of the explainability algorithms described herein) to determine whether the model, operating using the model parameter updates, is running as desired. For example, the model may be run in inference mode on the user device 110 and using the model parameter updates. An explainability algorithm 116 may assist in interpretation of results generated in the inference mode to check behavior of the updated model parameters before their aggregation in the server device 130. The model parameter updates are encrypted using the homomorphic encryption application 115, and sent to the server device 130 via the network 120. The server device 130 aggregates the model parameter updates from multiple user devices 110, and then sends the updated model parameters back to the user devices 110 for inference.

During an inference stage, the user device 110 processes the PII using the machine learning model 114, applying the explainability algorithm 116 to the processed PII data. This allows users of the user device 110 to have a better understanding of the processed PII data, which improves transparency and trust in the system. Overall, the user device 110 plays a critical role in the federated learning system by processing data locally and contributing to the training and inference stages, while ensuring the privacy and security of the PII.

In step 302, method 300 (R300) is tasked with the receipt of an encrypted model parameter update (EMPU). Specifically, the EMPU is received from the server device 130. This update contains at least parameters associated with personally identifiable information (PII), which are specifically encrypted using a homomorphic encryption (HE) algorithm. Homomorphic encryption is a form of encryption that allows computation on ciphertexts, generating an encrypted result which, when decrypted, matches the result of operations performed on the plaintext.

In step 304, method 300 decrypts the EMPU using the same HE algorithm. This process ensures that sensitive PII remains encrypted throughout the model update process, maintaining data privacy and security.

Upon successful decryption in step 304, method 300 proceeds to step 306, where the decrypted parameters are integrated into the machine learning model's model parameters. This integration is crucial for the model to learn and adapt based on the latest data while preserving the confidentiality of PII.

In step 308, the updated machine learning model 114 receives input data that contains PII. This data is used by the machine learning model 114 to generate output data which will be subjected to explainability analysis to ensure transparency and accountability.

In step 310, method 300 uses the machine learning model 114 to process the PII-containing data, resulting in output data. The output data is then analyzed in step 312 using various explainability algorithms, such as SHAP (SHapley Additive exPlanations), LIME (Local Interpretable Model-agnostic Explanations), Grad-CAM (Gradient-weighted Class Activation Mapping), TCAV (Testing with Concept Activation Vectors), and DeepLIFT (Deep Learning Important Features). These algorithms provide insights into how the MLM makes decisions, particularly when handling PII.

In summary, the described process ensures that the machine learning model can be updated and interpreted while maintaining the confidentiality of PII, utilizing the benefits of homomorphic encryption and explainability algorithms.

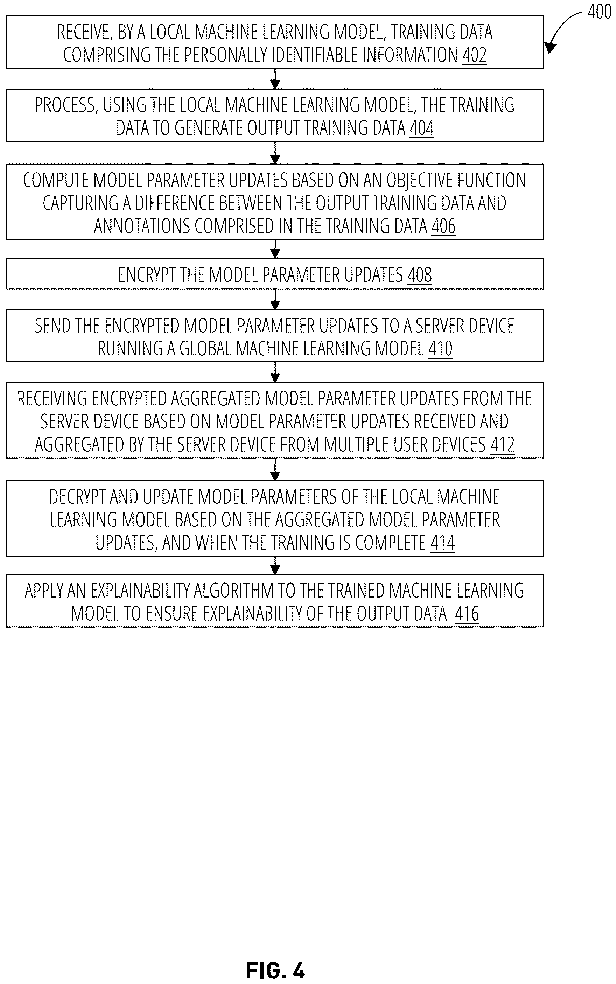

FIG. 4 shows a method for training the local machine learning model 114. The described steps outline a comprehensive protocol for a local machine learning model 114 to process, learn from, and contribute to a global machine learning model model while handling PII-containing data with utmost privacy and security.

In step 402, the local machine learning model receives PII-embedded training data. This data could include text, images, or any other form of data that contains identifiable information about individuals. The model's role is to learn from this data without compromising the privacy of the individuals involved.

Step 404 involves the local model processing the PII-laden training data to produce output data. This step includes data preprocessing, such as cleaning, normalization, and feature extraction, which is essential to prepare the data for effective learning by the machine learning model 114.

Step 406 is where the local model computes updates to its parameters. This is achieved by optimizing an objective function, typically a loss function, which measures the discrepancy between the model's predictions (output data) and the true values or annotations provided in the training dataset. Through this process, the model's parameters are adjusted to minimize the loss and enhance the model's predictive accuracy.

The locally updated model parameters may be checked or verified locally. For example, the local model may be run in inference mode (e.g. based on a user's own data) using the locally updated model parameters to verify its behavior. For example, an explainability algorithm may be run locally to assist in understanding of results generated by the local model and using the locally updated model parameters. An explainability algorithm may thus be used to check or verify the locally updated model parameters.

In step 408, the model's parameter updates are encrypted to ensure that any information about the updates is kept confidential. This is a critical step for protecting the privacy of the individuals whose data is being used for training. The homomorphic encryption application 115 is used to perform the encryption.

Step 410 sees the encrypted model parameter updates being sent by the server device 130 back to the user device 110. The server device 130 acts as a collective learning entity, aggregating updates from various local models to improve the machine learning model's performance.

Step 412 is the user device receiving encrypted updates from the server device 130. This step may involve sophisticated cryptographic protocols to ensure that the aggregation process does not compromise the privacy of the individual data.

In step 414, the encrypted model parameter updates are decrypted by the user device 110 and the model parameters on the user device 110 are updated with the decrypted model parameter updates. This is the final step of the local model's learning process, completing the training and preparing the model for deployment.

Finally, step 416 involves applying an explainability algorithm to the trained model. This step is critical for ensuring that the model's decisions can be understood and interpreted by humans, especially when decisions impact individuals. Explainability is a key aspect of responsible AI, providing transparency and accountability in machine learning models.

Throughout these steps, it's important to maintain compliance with data protection laws and regulations, employing privacy-preserving techniques such as differential privacy, homomorphic encryption, and secure multi-party computation to safeguard PII.

In step 502, method 500 engages in the collection of input training data that includes PII. This step is critical as it forms the foundation for the subsequent stages in the machine learning pipeline. The inclusion of PII necessitates stringent measures to protect the privacy of individuals represented in the dataset.

Moving to step 504, method 500 collects annotations corresponding to the input training data. Annotations are essential for supervised learning models as they provide the ground truth or labeled data that the model will learn from. These annotations can include various forms of metadata, such as class labels, bounding boxes for object detection, or transcriptions for audio data.

In step 506, method 500 employs homomorphic encryption to secure the privacy of both the input training data and the annotations. Homomorphic encryption is a form of encryption that allows computations to be performed on ciphertexts, generating an encrypted result which, when decrypted, matches the result of operations performed on the plaintext. This advanced cryptographic technique ensures that sensitive data remains confidential even when processed, thus enabling the secure transmission of model updates to a server.

Finally, in step 508, method 500 presents a combination of the encrypted input training data and corresponding encrypted annotations as the training data. This step is essential for the machine learning model's learning process, as it provides a rich, labeled dataset for the model to learn from while ensuring that the privacy of the individuals in the data is preserved.

### LIST OF REFERENCE SIGNS

100 system
110 user device
111 storage module
112 communication channel
113 processing module
114 machine learning model
115 homomorphic encryption application
116 explainability algorithm
120 network
130 server device
131 storage module
132 communication channel
133 processing module
134 model parameter update application
135 blockchain application
300 method
302 step
304 step
306 step
308 step
310 step
312 step
400 routine
402 step
404 step
406 step
408 step
410 step
412 step
414 step
416 step
500 method
502 step
504 step
506 step
508 step

## Claims

1. A computer-implemented method of processing input data, comprising:
receiving an encrypted model parameter update, wherein at least model parameters relating to personally identifiable information are encrypted using a homomorphic encryption algorithm,
decrypting the encrypted model parameter update using the homomorphic encryption algorithm,
applying the decrypted model parameter update to model parameters of a machine learning model,
receiving, by the machine learning model, input data comprising personally identifiable information;
processing, using a machine learning model, the input data to produce output data; and
applying an explainability algorithm to the output data.

2. The method of claim 1, wherein the receiving an encrypted model parameter update comprises:
receiving the encrypted model parameter update from a server device that aggregate the encrypted model parameter update from local encrypted model parameter updates received from a plurality of user devices.

3. The method of claim 2, wherein the deencrypting comprises using a partial or a fully homomorphic encryption algorithm to decrypt the model parameter update.

4. The method of claim 3, wherein the explainability algorithm comprises at least one of:
SHAP,
LIME,
Grad-CAM,
TCAV,
DeepLIFT, and
a selective decryption.

5. A machine learning model for processing input data comprising personally identifiable information,in particular for use in the method of any one of claims 1 to 4, comprising:
a decryption module to decrypt a model parameter update and use the decrypted model parameter update to update model parameters of the machine learning model,
an input layer configured to receive the input data,
intermediate and output layers configured to process the input data comprising the personally identifiable information and generate output data, and
an explainability module configured to explain the output data.

6. A computer-implemented method of training a machine learning model for processing personally identifiable information on a user device, in particular the machine-learning model of claim 5, comprising:
receiving, by a local machine learning model, training data comprising the personally identifiable information;
processing, using the local machine learning model, the training data to generate output training data,
computing model parameter updates based on an objective function capturing a difference between the output training data and annotations comprised in the training data,
encrypting the model parameter updates,
sending the encrypted model parameter updates to a server device running a global machine learning model,
receiving encrypted aggregated model parameter updates from the server device based on model parameter updates received and aggregated by the server device from multiple user devices, and
decrypting and updating model parameters of the local machine learning model based on the aggregated model parameter updates, and when the training is complete:
applying an explainability algorithm to the trained machine learning model to ensure explainability of the output data.

7. The method of claim 6, further comprising
committing the encrypted model parameter updates to a blockchain.

8. A computer-implemented method of training a machine-learning model for processing personally identifiable information on a server device, in particular the machine-learning model of claim 5, comprising:
receiving, by the server device, from multiple user devices respectively running a local machine learning model encrypted model parameter updates;
calculating aggregated model parameter updates from the received encrypted model parameter updates,
updating model parameters of a global machine learning model running on the server device,
computing aggregated model parameter updates directed to the local machine learning model running on the user devices based on the encrypted model parameter updates and the model parameters of the global machine learning model,
encrypting the aggregated model parameter updates,
sending the encrypted aggregated model parameter updates to the user devices, and when the training is complete:
applying an explainability algorithm to the trained machine learning model to ensure explainability of the output data.

9. The method of claim 8, further comprising committing the aggregated model parameter updates to a blockchain.

10. A computer-implemented method of generating training data for a machine-learning model, in particular the machine-learning model of claim 8, comprising:
collecting input training data comprising personally identifiable information,
collecting annotations for the input training data,
preferably using homomorphic encryption to secure data privacy of the input training data and the annotations, so that model parameters of the machine learning model can be encrypted when sent to a server device; and
provide the combination of input training data and corresponding annotations as training data.

11. Training data for use in the method of training a machine-learning model of any one of claims 6 to 9, preferably determined according to the method of claim 10, comprising:
input training data containing personally identifiable information from a local device and annotations containing personally identifiable information from a local device.

12. A data processing apparatus comprising means for carrying out the method of any one of claims 1-4, 6-7 or 10-11.

13. A data processing apparatus comprising means for carrying out the method of claim 8 or 9.

14. A computer program comprising instructions which, when the program is executed by a computer, cause the computer to carry out the method of any one of claims 1-4 or 6-10.

15. A computer-readable medium comprising instructions which, when executed by a computer, cause the computer to carry out the method any one of claims 1-4 or 6-10.
